(19) Europäisches Patentamt
European Patent Office
Office européen des brevets

(11) **EP 4 317 286 A1**

(12) **EUROPEAN PATENT APPLICATION**
published in accordance with Art. 153(4) EPC

(43) Date of publication:
**07.02.2024 Bulletin 2024/06**

(21) Application number: **22780105.7**

(22) Date of filing: **16.03.2022**

(51) International Patent Classification (IPC):
**C08K 5/1539** (2006.01)     **C08K 5/1575** (2006.01)
**C08L 67/04** (2006.01)     **C08L 101/16** (2006.01)

(52) Cooperative Patent Classification (CPC):
**C08K 5/1539; C08K 5/1575; C08L 67/04;
C08L 101/16**

(86) International application number:
**PCT/JP2022/011783**

(87) International publication number:
**WO 2022/209885 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021058739**

(71) Applicant: **Kureha Corporation
Chuo-ku
Tokyo 103-8552 (JP)**

(72) Inventors:
• **TOSE, Takenori
Tokyo 103-8552 (JP)**
• **SHODA, Motoharu
Tokyo 103-8552 (JP)**
• **FURUTA, Hiroaki
Tokyo 103-8552 (JP)**
• **KOBAYASHI, Fuminori
Tokyo 103-8552 (JP)**
• **SUZUKI, Yoshinori
Tokyo 103-8552 (JP)**

(74) Representative: **Zimmermann & Partner
Patentanwälte mbB
P.O. Box 330 920
80069 München (DE)**

(54) **MOLDED BODY, DOWNHOLE TOOL MEMBER, AND DOWNHOLE TOOL**

(57)     The molded body according to an embodiment of the present invention includes a composition containing a glycolic acid polymer, a plasticizer, and a degradation accelerator. An absolute value of a difference between a Fedors solubility parameter of the plasticizer and a Fedors solubility parameter of the glycolic acid polymer is 6 (J/cm$^3$)$^{1/2}$ or less. A content of the plasticizer in the composition is 10 mass% or greater and 50 mass% or less.

## Description

### TECHNICAL FIELD

The present invention relates to: a molded body including a composition containing a glycolic acid polymer; a downhole tool member including the molded body; and a downhole tool containing the downhole tool member.

### BACKGROUND ART

A glycolic acid polymer has high strength and is a degradable resin material having hydrolyzability and degradability. Because of such characteristics, glycolic acid polymers are used as medical materials such as bone fixation materials and sutures. Also, in recent years, their applications as a component for a downhole tool used for recovery of hydrocarbon resources is expanding. Depending on the applications, better degradation rates are demanded, and various research and development have been conducted to improve degradation rates of glycolic acid polymer.

For example, Patent Document 1 discloses a carboxylic acid anhydride as a degradation accelerator of a glycolic acid polymer resin composition.

Patent Document 2 discloses that, when a biodegradable resin material contains a plasticizer, degradation of polymer by moisture can be controlled and the degradation rate of the biodegradable resin material can be accelerated in a well environment. Patent Document 2 also discloses a polylactic acid having a repeating number of 2 or greater and 10 or less as an example of a plasticizer.

### Citation List

### Patent Literature

   Patent Document 1: JP 2019-060219 A

   Patent Document 2: US 2005/0205266 A specification

### SUMMARY OF INVENTION

### TECHNICAL PROBLEM

Further improvement in degradation rate of a molded body is demanded in use of a molded body containing a glycolic acid polymer in a member of a downhole tool.

An object of an aspect of the present invention is to provide a molded body with improved degradation rate.

### SOLUTION TO PROBLEM

As a result of diligent research, the present inventors focused on a composition containing a degradation accelerator, a plasticizer, and a glycolic acid polymer. The present inventors then found that molded bodies with improved degradation rates can be obtained when a difference between a solubility parameter of a plasticizer and a solubility parameter of a glycolic acid polymer in the composition is in a particular range, and thus completed the present invention.

A molded body according to an aspect of the present invention is a molded body including a composition containing a glycolic acid polymer, a plasticizer, and a degradation accelerator, in which an absolute value of a difference between a Fedors solubility parameter of the plasticizer and a Fedors solubility parameter of the glycolic acid polymer is 6 $(J/cm^3)^{1/2}$ or less, and a content of the plasticizer in the composition is 10 mass% or greater and 50 mass% or less.

### ADVANTAGEOUS EFFECTS OF INVENTION

According to an aspect of the present invention, a molded body with improved degradation rate can be provided.

**DESCRIPTION OF EMBODIMENTS**

[Molded body]

A molded body according to the present embodiments includes a composition containing a glycolic acid polymer, a plasticizer, and a degradation accelerator.

[Glycolic acid polymer]

In the present specification, the glycolic acid polymer is a polymer containing a repeating unit derived from glycolic acid ($-(-O-CH_2-CO-)-$). The glycolic acid polymer may be a homopolymer of glycolic acid (polyglycolic acid (PGA)). Furthermore, the glycolic acid polymer may be a copolymer containing a repeating unit derived from glycolic acid and a repeating unit derived from another monomer.

The copolymer containing a repeating unit derived from glycolic acid and a repeating unit containing another monomer (hereinafter, referred to as "glycolic acid copolymer") will be described below.

(Glycolic acid copolymer)

From the perspective of improvement of degradation rate, the glycolic acid copolymer may be a copolymer including two or more straight macromolecular chains A, each containing a repeating unit derived from glycolic acid, chemically bonded to a macromolecular chain B that is different from the macromolecular chain A. The macromolecular chain A and the macromolecular chain B will be described below.

In the glycolic acid copolymer, two or more macromolecular chains A may be chemically bonded to a macromolecular chain B, and bonding positions of the macromolecular chains A in the macromolecular chain B are not particularly limited. For example, the copolymer may be a triblock copolymer, in which a macromolecular chain A is chemically bonded to each of the two terminals of a macromolecular chain B ("ABA-type block copolymer", where A is the macromolecular chain A, and B is the macromolecular chain B), or may be a graft copolymer, in which two or more macromolecular chains A are graft-bonded to a macromolecular chain B.

From the perspective of superior improvement effect for the rate of decrease in thickness during degradation when the glycolic acid copolymer is formed into a molded body, the copolymer is preferably an ABA-type block copolymer (however, A is the macromolecular chain A, and B is the macromolecular chain B).

Furthermore, in the glycolic acid copolymer, the macromolecular chain A and the macromolecular chain B are preferably bonded by an ester bond. By this, effect of readily improve the rate of decrease in thickness during degradation when the glycolic acid copolymer composition is formed into a molded body is achieved.

In particular, in a case where the macromolecular chain B is a unit having a higher hydrophilicity or flexibility than that of the macromolecular chain A, the macromolecular chain A and the macromolecular chain B are particularly preferably bonded by an ester bond. Specifically, in a case where the macromolecular chain B is a unit having a higher hydrophilicity or flexibility than that of the macromolecular chain A, water tends to permeate around the macromolecular chain B rather than around the macromolecular chain A, and the ester bond between the macromolecular chain A and the macromolecular chain B readily hydrolyzes compared to the ester bond in the macromolecular chain A. The molecular weight of the glycolic acid copolymer significantly decreases due to cutting between the macromolecular chain A and the macromolecular chain B in the glycolic acid copolymer due to hydrolysis of the ester bond between the macromolecular chain A and the macromolecular chain B, and thus the rate of decrease in thickness tends to improve.

The macromolecular chain A and the macromolecular chain B constituting the glycolic acid copolymer will be described below.

(Macromolecular chain A)

Examples of the macromolecular chain A include a straight macromolecular chain containing a glycolic acid unit. The number of glycolic acid unit constituting one block of the macromolecular chain A in the glycolic acid copolymer is not particularly limited, and can be appropriately decided in a range that the glycolic acid copolymer can exhibit degradability originated from the macromolecular chain A.

(Macromolecular chain B)

The macromolecular chain B is a macromolecular chain different from the macromolecular chain A. For example, the macromolecular chain B may be a macromolecular chain derived from a macromolecular compound having a glass transition temperature (Tg) of lower than 45°C. Furthermore, the macromolecular chain B may be a macromolecular chain derived from a macromolecular compound having a weight average molecular weight of 1500 or greater and 250000 or less.

The glass transition temperature of the macromolecular compound from which the macromolecular chain B is derived (hereinafter, "macromolecular compound B") is preferably 45°C or lower, and more preferably 0°C or lower, from the perspective of making the glass transition temperature of the glycolic acid copolymer lower than that of a polymer only consisting of the macromolecular chain A. The glass transition temperature of the macromolecular compound from which the macromolecular chain B is derived can be measured by differential scanning calorimetry (DSC).

The weight average molecular weight of the macromolecular compound B is preferably 2500 or greater, more preferably 3000 or greater, and even more preferably 7500 or greater, from the perspective of further improving the rate of decrease in thickness of the molded body during degradation. From the perspective of improving strength of the molded body, the weight average molecular weight of the macromolecular compound B is preferably 50000 or less, and more preferably 20000 or less. The weight average molecular weight of the macromolecular compound B being 50000 or less is advantageous from the perspectives of solubility in glycolide during glycolic acid copolymer polymerization and controlling of copolymerizability. The weight average molecular weight of the macromolecular compound B can be measured by gel permeation chromatography (GPC).

The macromolecular compound B is not particularly limited as long as the macromolecular compound B is a macromolecular compound that has functional groups at two or more terminals, the functional groups being capable of chemically bonding with glycolic acid units constituting the macromolecular chain A, that has a weight average molecular weight and/or a glass transition temperature in the particular ranges described above, and that is not polyglycolic acid, to function as a polymerization initiator.

Examples of the macromolecular compound B described above include a polyol having the particular weight average molecular weight and glass transition temperature described above. Examples of the polyol include polyethylene glycol, polypropylene glycol, polytetramethylene ether glycol, polycaprolactone, polydioxanone, polydimethylsiloxane, and polyethylene oxalate. "Polyol" may be a homopolymer containing only one type of repeating unit, or may be a copolymer further containing a repeating unit derived from another monomer.

From the perspective of imparting hydrophilicity to the glycolic acid copolymer, the macromolecular compound B is preferably a hydrophilic polyhydric alcohol-based polymer having a terminal hydroxy group. Examples of the hydrophilic polyhydric alcohol-based polymer having a terminal hydroxy group include polyethylene glycol, polypropylene glycol, polyglycerin, and polyvinyl alcohol.

In an aspect of the present invention, the macromolecular compound B may be a hydrophilic polyhydric alcohol having a terminal hydroxy group and having a weight average molecular weight of 3000 or greater and 50000 or less. When the macromolecular compound B is a hydrophilic polyhydric alcohol having a terminal hydroxy group and having a weight average molecular weight of 3000 or greater and 50000 or less, hydrophilicity of the macromolecular chain B is exhibited in the glycolic acid copolymer, thus affinity for water during degradation improves, and as a result, an effect of further improving the rate of decrease in thickness of the molded body during degradation is achieved.

In another aspect of the present invention, the macromolecular compound B may be polyethylene glycol or polypropylene glycol having a weight average molecular weight of 3000 or greater and 50000 or less. The polyethylene glycol and polypropylene glycol has a particularly low glass transition temperature and particularly high hydrophilicity. Thus, when the hydrophilic polyhydric alcohol containing a terminal hydroxy group is polyethylene glycol or polypropylene glycol, an effect of imparting flexibility and hydrophilicity to the glycolic acid copolymer is achieved.

In another aspect of the present invention, the macromolecular compound B may be polyethylene glycol having a weight average molecular weight of 7500 or greater and 50000 or less. When the macromolecular compound B is polyethylene glycol having a weight average molecular weight of 7500 or greater and 50000 or less, an effect of further improving the rate of decrease in thickness of the molded body during degradation is achieved.

The macromolecular compound B may be a homopolymer containing a repeating unit derived from one monomer, or may be a copolymer further containing a repeating unit derived from another monomer.

Examples of such other monomers include cyclic monomers such as ethylene oxalate (1,4-dioxane-2,3-dione), lactides, lactones (e.g., β-propiolactone, β-butyrolactone, β-pivalolactone, γ-butyrolactone, δ-valerolactone, β-methyl-δ-valerolactone, and ε-caprolactone), carbonates (e.g., trimethylene carbonate), ethers (e.g., 1,3-dioxane), ether esters (e.g., dioxanone), and amides (e.g., εcaprolactam); hydroxycarboxylic acids such as lactic acid, 3-hydroxypropanoic acid, 3-hydroxybutanoic acid, 4-hydroxybutanoic acid, 6-hydroxycaproic acid, and the alkylesters thereof; mixtures containing substantially equimolar amounts of aliphatic diols, such as ethylene glycol, propylene glycol, tetramethylene ether glycol, and 1,4-butanediol, and aliphatic dicarboxylic acids, such as succinic acid and adipic acid, or the alkyl esters thereof; and two or more types of these.

The repeating unit derived from another monomer can be employed from the perspective of adjusting physical properties of the macromolecular compound B. For example, employing such another repeating unit enables affinity of the macromolecular compound B for water to be adjusted. The content of another repeating unit in the macromolecular compound B can be appropriately decided in the range that the intended effect by the macromolecular chain B is adequately achieved. The content of a repeating unit derived from another monomer in the macromolecular compound B may be 50 mass% or less, and is preferably 30 mass% or less, and even more preferably 10 mass% or less. The macromolecular compound B may be in a straight-chain form, or may be a graft copolymer, in which another macromolecular compound is graft-bonded.

The macromolecular chain B may contain an ester bond in a molecule. When the macromolecular chain B contains an ester bond in a molecule, cutting also occurs in the macromolecular chain B due to hydrolysis of an ester bond, the rate of decrease in thickness tends to further improve.

From the perspectives of allowing the macromolecular chain B to adequately exhibit hydrophilicity in the glycolic acid copolymer and improving the rate of decrease in thickness of the molded body during degradation, the amount of the macromolecular chain B in the glycolic acid copolymer is preferably 0.5 or greater, and more preferably 1.5 or greater, with respect to 100 total of the macromolecular chain A in terms of mass ratio. Furthermore, from the perspective of maintaining strength of the glycolic acid copolymer, the amount of the macromolecular chain B in the glycolic acid copolymer is preferably 30 or less, and more preferably 20 or less, with respect to 100 total of the macromolecular chain A in terms of mass ratio.

The glycolic acid polymer can be produced by a known method. For example, the glycolic acid copolymer can be suitably produced by using the macromolecular compound B, from which the macromolecular chain B is derived, as a polymerization initiator, and subjecting glycolide, which is a dimer of glycolic acid, to ring-opening polymerization in the presence of a small amount of a catalyst and in the substantial absence of a solvent (i.e., under bulk polymerization conditions). The reaction temperature in the ring-opening polymerization can be appropriately decided in a range that can appropriately proceed the ring-opening polymerization of the glycolide and is, for example, 140°C. Examples of such a catalyst include a cationic catalyst such as organic tin carboxylate, tin halide, and antimony halide. As the glycolic acid polymer, a commercially available product may be used.

(Plasticizer)

In the present specification, a plasticizer means an agent (compound) that reduces the glass transition temperature (Tg) of the composition containing the glycolic acid polymer and that imparts plasticity to the composition. Examples of the plasticizer include an ester and an ester derivative. Examples of the ester and the ester derivative include a cyclic ester such as glycolide; a fatty acid ester derivative such as triacetin; an aliphatic dibasic acid ester such as adipic acid ester; a phthalate such as dimethyl phthalate; a carbonate ester such as ethylene carbonate; and an aromatic carboxylate. One type of these plasticizers may be used alone, or two or more types of these plasticizers may be used in combination.

The content of the plasticizer in the composition is 10 mass% or greater, preferably 12 mass% or greater, more preferably 15 mass% or greater, even more preferably 20 mass% or greater, and yet even more preferably 25 mass% or greater, with respect to 100 mass% of the composition. Furthermore, the content is 50 mass% or less, preferably 45 mass% or less, more preferably 40 mass% or less, and even more preferably 35 mass% or less. When the content of the plasticizer is in the range described above, the glass transition temperature (Tg) of the composition can be adequately lowered, and adequate plasticity can be imparted to the composition.
The content of the plasticizer in the composition is preferably greater than the content of the degradation accelerator described below.

(Degradation accelerator)

In the present specification, a degradation accelerator means an agent (compound) that accelerates a hydrolysis reaction of the composition containing the glycolic acid polymer. Examples of the degradation accelerator include a carboxylic acid anhydride and a phosphorus compound. One type of these degradation accelerators may be used alone, or two or more types of these degradation accelerators may be used in combination.

The carboxylic acid anhydride in the composition is not particularly limited. From the perspective of heat resistance that can tolerate the temperature during molding processing of the composition and from the perspective of miscibility with the composition, the carboxylic acid anhydride having a ring structure is preferable, hexanoic anhydride, octanoic anhydride, decanoic anhydride, lauric anhydride, myristic anhydride, palmitic anhydride, stearic anhydride, benzoic anhydride, succinic anhydride, maleic anhydride, phthalic anhydride, trimellitic anhydride, tetrahydrophthalic anhydride, butanetetracarboxylic dianhydride, 3,3',4,4'-benzophenone tetracarboxylic dianhydride, diphenylsulfone tetracarboxylic dianhydride, biphenyl tetracarboxylic dianhydride, ethylene glycol bis-anhydro trimellitate, and glycerin bis-anhydro trimellitate monoacetate are more preferable, and phthalic anhydride, trimellitic anhydride, benzoic anhydride, 3,3',4,4'-benzophenone tetracarboxylic dianhydride, and benzene-1,2,4,5-tetracarboxylic anhydride (pyromellitic anhydride) are particularly preferable.

The phosphorus compound in the composition is not particularly limited; however, the phosphorus compound is preferably an organic phosphorus compound such as phosphate and phosphite. Of these, the organic phosphorus compound having at least one structure selected from the group consisting of a long-chain alkyl group having from 8 to 24 carbons, an aromatic ring, and a pentaerythritol skeleton is more preferable.

Examples of the phosphate having a long-chain alkyl group having from 8 to 24 carbons include mono- or di-stearyl acid phosphate or its mixture, and di-2-ethylhexyl acid phosphate. Examples of the phosphite having an aromatic ring include tris(nonylphenyl) phosphite. Examples of the phosphite having a pentaerythritol skeleton structure include cyclic neopentanetetraylbis(2,6-di-tert-butyl-4-methylphenyl)phosphite, cyclic neopentanetetraylbis(2,4-di-tert-butylphenyl)phosphite, and cyclic neopentanetetraylbis(octadecyl)phosphite.

The content of the degradation accelerator in the composition is preferably 1 mass%, and more preferably 3 mass% or greater, with respect to 100 mass% of the composition. Furthermore, the content is preferably 50 mass% or less, more preferably 40 mass% or less, and even more preferably 30 mass% or less. When the content of the degradation accelerator is in the range, the degradation accelerator is less likely to bleed out from the composition, and thus molding processing of the composition can be facilitated while the degradation rate of the composition is accelerated.

(Fedors solubility parameter)

In the composition according to the present embodiments, the absolute value of the difference between a Fedors solubility parameter of the plasticizer and a Fedors solubility parameter of the glycolic acid polymer is 6 $(J/cm^3)^{1/2}$ or less, preferably 5.5 $(J/cm^3)^{1/2}$ or less, and more preferably 5 $(J/cm^3)^{1/2}$ or less. Hereinafter, "Fedors solubility parameter" may be abbreviated as "SP value". When the absolute value of the difference between the SP value of the plasticizer and the SP value of the glycolic acid polymer is in the range described above, the composition has adequate plasticity.

The SP value can be calculated, for example, according to "SP value: Foundation/Application and Calculation Method (ＳＰ 値 基礎・応用と計算方 法)" (published by Johokiko Co., Ltd. (2005) pp. 66-67) by Hideki Yamamoto. More specifically, by the following Equation (1), an SP value $\delta$ $((cal/cm^3)^{1/2})$ of a target compound (glycolic acid polymer or plasticizer) is calculated.

$$\delta = (\Sigma Ecoh/\Sigma V)^{1/2} \dots (1)$$

In Equation (1), $\Sigma Ecoh$ represents the sum total of Ecoh (cohesive energy density of a structural unit of a target compound $(cal/cm^3)$), and $\Sigma V$ represents V (molar volume of a structural unit of a target compound $(cm^3)$).

In a case where two or more types of plasticizers are contained in the composition, the absolute value of the difference between the SP value of at least one type of the plasticizers and the SP value of the glycolic acid polymer is 6 $(J/cm^3)^{1/2}$ or less.

(Weight average molecular weight of composition)

Weight average molecular weight (Mw) of the composition is preferably 150000 or greater, more preferably 160000 or greater, and even more preferably 170000 or greater, from the perspectives of maintaining of strength of the molded body and extrusion molding. Furthermore, from the perspective of facilitating molding at the time of extrusion molding or injection molding, the Mw of the composition is preferably 500000 or less, more preferably 450000 or less, and even more preferably 400000 or less.

The weight average molecular weight of the composition can be measured by, for example, the method described below. Approximately 10 mg of the composition is heated and dissolved in 0.5 mL of DMSO at 150°C, and then cooled to room temperature. The cooled solution is diluted to 10 mL with hexafluoroisopropanol (HFIP), and the weight average molecular weight of the composition is measured by using a gel permeation chromatograph (GPC) instrument. As the standard substance, polymethyl methacrylate (PMMA) is used. An example of the GPC instrument is Shodex GPC-104 (detector: RI; column: two HFIP-606M). Furthermore, as a solvent, HFIP containing 5 mM $CF_3COONa$ may be used.

(Other components)

The composition may contain other components in addition to the glycolic acid polymer, the plasticizer, and the degradation accelerator, in a range that does not impair the object of the present invention.

Examples of such other components include various additives such as a heat stabilizer, a photostabilizer, an inorganic filler, a moisture-proof agent, a waterproof agent, a water-repellent agent, a lubricant, a hydrophilic agent, a water-absorbing agent, a nucleating agent, and a pore-forming agent. In addition, the composition may contain a polymerization initiator, a catalyst, or the like used in preparation of a polymer.

The composition can be prepared by mixing the glycolic acid polymer, the plasticizer, and the degradation accelerator. The plasticizer may be added during preparation of the glycolic acid polymer. Furthermore, in a case where the glycolic acid polymer is obtained by ring-opening polymerization of glycolide, remaining glycolide may be used as a plasticizer. That is, the composition may be prepared by mixing a glycolic acid polymer composition containing glycolide and a glycolic acid polymer obtained by preparation of the glycolic acid polymer, the degradation accelerator, and an optional plasticizer.

The molded body according to the present embodiments is a polyglycolic acid molded body made of the composition described above. The degradation rate of the molded body may be evaluated by, for example, measurement of the rate of decrease in thickness of the molded body as described in Examples.

As described above, the molded body according to the present embodiments contains the degradation accelerator and the plasticizer. The degradation accelerator has an action of accelerating degradation of a molded body by improving the hydrolysis rate of the glycolic acid polymer. The plasticizer has an action of accelerating degradation of a molded body by improving the amount of water absorption by the glycolic acid polymer. The molded body containing the degradation accelerator and the plasticizer improves the amount of water absorption by the glycolic acid polymer and the hydrolysis rate and synergistically accelerates degradation of the molded body. As indicated in Examples, compared to a molded body containing only a degradation accelerator and a molded body containing only a plasticizer, the molded body according to the present embodiments has a high rate of decrease in thickness due to the synergistic effect of the degradation accelerator and the plasticizer.

(Method of producing a molded body)

The molded body according to the present embodiments can be obtained by molding the composition described above. A molding method is not limited. Examples of the method include injection molding, melt extrusion molding, solidification- and extrusion-molding, compression molding (press molding), and centrifugal molding.

An example of a case where the molded body is produced by solidification- and extrusion-molding will be described. Pellets made of the composition are supplied to an extruder with a cylinder set at not lower than the melting point of the composition and 255°C or lower (typically, from 200 to 255°C), and melt-kneaded. Next, the melt-kneaded article is extruded from the extrusion die at the tip of the extruder into the flow path of a forming die, and cooled and solidified to not higher than the crystallization temperature of the composition in the flow path of the forming die, so that the resultant is extruded to the outside at a speed of 5 to 50 mm/10 minutes from the tip of the forming die. A molded body, which is the solidification- and extrusion-molded body, is produced by pressurizing and pulling the extrudate while applying a back pressure of 1500 to 8500 kg in the forming die direction. The molded body may be annealed by a heat treatment at a temperature of 150°C to 230°C for 3 to 24 hours.

An example of a case where the molded body is produced by injection molding will be described. The pellets made of the composition are supplied to an injection molding machine equipped with a mold for injection molding. The temperature of the cylinder is set to not lower than the melting point of the composition and 255°C or lower (typically, from 200 to 255°C), and the mold temperature is set to 0°C or higher and not higher than the melting point of the composition (typically, from 0 to 190°C). Then, the mixture is injection-molded at an injection pressure of 1 to 104 MPa (preferably 10 to 104 MPa) to produce a molded body, which is an injection-molded body. This molded body may be subjected to annealing at a temperature that is not lower than the crystallization temperature of the composition and not higher than the melting point (typically, from 70 to 220°C) for 1 minute to 10 hours.

The thickness or diameter of the molded body is preferably 1 mm or greater, and more preferably 3 mm or greater, for example, from the perspective of machine processing into a downhole tool member. Furthermore, the upper limit of the thickness or diameter of the molded body is not particularly limited and is preferably 500 mm or less, and more preferably 400 mm or less.

[Downhole tool member]

The downhole tool member according to the present embodiments is a member used for underground excavation to recover hydrocarbon resources, such as petroleum and gases, from the ground and is made of the molded body described above. The molded body may be used as is as a downhole tool member, or may be subjected to a known machine processing (secondary processing) to produce a downhole tool member. Examples of the machine processing include cutting.

The shape and size of the downhole tool member according to the present embodiments are not particularly limited, and for example, the thickness or diameter is 5 to 500 mm, preferably 20 to 300 mm, and more preferably 30 to 200 mm. The shape of the downhole tool member may be various shapes such as a round bar shape, a plate shape, a hollow product such as a pipe, and an irregularly shaped product. A round bar, a hollow shape, or a plate shape is preferable, as it is easy to perform extrusion molding and a subsequent densification treatment and is often suitable for an extrusion-molded body that is a material for machining. In order to form a downhole tool member for petroleum excavation, particularly to form a blocking plug mandrel, a round bar shape is more preferable.

[Downhole tool]

The downhole tool according to the present embodiments include the downhole tool member. In the present specification, a device or a component thereof that is used for various well treatment such as drilling of a well, closure of a well, and fracturing and that is placed in the well is referred to as a downhole tool. The shape of the downhole tool is not particularly limited and, for example, can be a known shape. Examples of the downhole tool include a flack plug, a bridge plug, a cement retainer, a perforation gun, a ball sealer, a filler plug, and a packer.

[Summary]

The molded body according to the present embodiments is a molded body including a composition containing a glycolic acid polymer, a plasticizer, and a degradation accelerator, an absolute value of a difference between a Fedors solubility parameter of the plasticizer and a Fedors solubility parameter of the glycolic acid polymer being 6 $(J/cm^3)^{1/2}$ or less, and a content of the plasticizer in the composition being 10 mass% or greater and 50 mass% or less.
In the molded body according to the present embodiments, the glycolic acid polymer may be a copolymer including a straight macromolecular chain A being chemically bonded to a macromolecular chain B, the macromolecular chain A including a repeating unit derived from glycolic acid, and the macromolecular chain B being different from the macromolecular chain A, and the macromolecular chain B may be derived from a macromolecular compound having a glass transition temperature of lower than 45°C.
In the molded body according to the present embodiments, the glycolic acid polymer may be a block copolymer including the macromolecular chain A and the macromolecular chain B.
In the molded body according to the present embodiments, the glycolic acid polymer is a homopolymer of glycolic acid.
In the molded body according to the present embodiments, a weight average molecular weight of the composition is 150000 or greater and 500000 or less.
In the molded body according to the present embodiments, the degradation accelerator may be a carboxylic acid anhydride.
In the molded body according to the present embodiments, a thickness or a diameter may be 1 mm or greater.
The downhole tool member according to the present embodiments includes the molded body.
The downhole tool according to the present embodiments includes the downhole tool member.

## EXAMPLES

Hereinafter, a composition of a glycolic acid polymer obtained by polymerization is referred to as "polymer composition". Furthermore, a composition containing a glycolic acid polymer (or polymer composition), a plasticizer, and a degradation accelerator is simply referred to as "composition". In the following Examples, the symbol "%" represents mass% unless otherwise noted.

[Measurement of SP values of glycolic acid polymer and plasticizer]

The measurement of the SP value was performed in accordance with "SP value: Foundation/Application and Calculation Method (S P 値 基礎 ▪ 応用と計算方 法)" (published by Johokiko Co., Ltd. (2005) pp. 66-67) by Hideki Yamamoto. More specifically, by the following Equation (1), an SP value $\delta$ $((cal/cm^3)^{1/2})$ of a target compound (glycolic acid polymer or plasticizer) was calculated.

$$\delta = (\Sigma Ecoh/\Sigma V)^{1/2} \dots (1)$$

In Equation (1), $\Sigma Ecoh$ represents the sum total of Ecoh (cohesive energy density of a structural unit of a target compound $(cal/cm^3)$), and $\Sigma V$ represents V (molar volume of a structural unit of a target compound $(cm^3)$).
The measurement results of SP values, and the difference between the SP value of the plasticizer and the SP value of the glycolic acid polymer are indicated in Table 1.

[Table 1]

| | SP value | Difference from PGA | Difference from PGA-PEG | Difference from PGA-PCL | Difference from PGA-PTMG |
|---|---|---|---|---|---|
| | $(J/cm^3)^{1/2}$ | | | | |
| PGA | 26.8 | | | | |
| PGA-PEG | 26.6 | | | | |
| PGA-PCL | 26.1 | | | | |
| PGA-PTMG | 26.5 | | | | |
| PMDA | 33.4 | 6.6 | 6.8 | 7.3 | 6.6 |
| Glycolide | 26.8 | 0 | 0.2 | 0.7 | 0 |
| TrA | 21.2 | -5.6 | -5.4 | -4.9 | -5.6 |
| Daifatty 101 | 21.9 | -4.9 | -4.7 | -4.2 | -4.9 |
| Ethylene carbonate | 22.5 | -4.3 | -4.1 | -3.6 | -4.3 |
| Dimethyl phthalate | 22.5 | -4.3 | -4.1 | -3.6 | -4.3 |
| PEG | 19.2 | -7.6 | -7.4 | -6.9 | -7.6 |

[Evaluation of composition and molded body]

The following evaluations were performed for the compositions and the molded bodies obtained in Examples and Comparative Examples.

[Measurement of weight average molecular weight of molded body]

Approximately 10 mg of a sample was heated and dissolved in 0.5 mL of DMSO at 150°C and then cooled to room temperature. The cooled solution was diluted to 10 mL with hexafluoroisopropanol (HFIP), and the weight average molecular weight of the composition was measured by using a GPC instrument. As the standard substance, polymethyl methacrylate (PMMA) was used. The measurement conditions are indicated below.

Instrument: Shodex GPC-104 (detector: RI; columns: two HFIP-606M)
Solvent: 5 mM $CF_3COONa$ in HFIP

[Measurement of glycolide content in molded body]

In approximately 100 mg of a sample, p-chlorobenzophenone-containing DMSO (0.4 mg/2 mL) was added and heated and dissolved at 150°C for approximately 10 minutes. After the solution was cooled to room temperature, the solution was filtered. Gas chromatography (GC) measurement was performed for the obtained filtrate. The measurement conditions are indicated below.

Instrument: GC-2010, available from the Shimadzu Corporation
Column: RESTEK Rxi-5ms
Column temperature: Retention at 150°C for 5 minutes, (then temperature increase at 20°C/min), and then retention at 270°C for 3 minutes
Injection temperature: 180°C

(Measurement of glass transition temperature of molded body)

In a pan for measurement, approximately 10 mg of a sample was placed, and measurement of the glass transition temperature was performed by differential scanning calorimetry (DSC) measurement. The measurement conditions are indicated below.

Instrument: Mettler Toledo DSC3+
Column temperature: Retention at -50°C for 5 minutes, (then temperature increase at 20°C/min), and then retention at 250°C for 3 minutes
Gas: $N_2$

(Measurement of rate of decrease in thickness)

For the molded body, the required number of test pieces that were 10 mm cubes were prepared. Next, the test piece was placed in a 1 L autoclave at a temperature of 66°C. An immersion test was then performed by filling the autoclave with water (deionized water). The test piece was retrieved after immersion at predetermined time intervals, and the cross-sectional surface was cut and exposed. After the test piece was left to stand overnight in a dry room and dried, the thickness of the core part (hard portion) of the test piece was measured. The reduced thickness was measured from the difference between the thickness before immersion (initial thickness, specifically 10 mm) and after immersion. The change of the reduced thickness of the test piece over time was determined based on the measured value of the reduced thickness of the test piece measured for different immersion time periods. Then, the rate of decrease in thickness (unit: mm/h) of the test piece having a thickness of 10 mm was calculated from the time variation for the thickness reduction of the test piece in a range where the thickness reduction of the test piece had linear variation over time.

[Example 1-1]

In a polymerization vessel, with respect to 100 parts by mass of glycolide, 0.003 parts by mass of tin dichloride as a catalyst and 0.3 parts by mass of 1-dodecanol as a polymerization initiator were charged. The charged contents were retained under a heated condition at 170°C for 2 hours, and thus a polymer composition 1-1 was obtained. The polymer composition 1-1 did not contain glycolide.

In the polymer composition 1-1, pyromellitic dianhydride (PMDA) as a degradation accelerator, glycolide as a plasticizer, and a mixture of distearyl acid phosphate and monostearyl acid phosphate ("ADK STAB AX-71", available from Adeka Corporation) as a thermal stabilizer were blended, and thus a composition was obtained. The contents of the plasticizer and the degradation accelerator contained in the composition are listed in Table 1.

The composition was supplied to a feed part of a twin-screw extrusion kneader ("2D25S", available from Toyo Seiki Seisaku-sho, Ltd.) with a screw temperature set at 190 to 240°C, melt-kneaded, and extrusion-molded, and thus pellets of the composition were obtained. Then, the pellets of the composition were supplied to a feed part of an injection molding machine ("EC-100N", available from Toshiba Machine Co., Ltd.) with a cylinder temperature set at 190 to 240°C and injection-molded, and thus a molded body was obtained. The mold temperature during the injection molding was set to 100°C.

[Example 1-2]

A polymer composition 1-2 was obtained by the same procedure as in Example 1-1 except for changing the heating condition of the charged contents charged in the polymerization vessel to 150°C. The polymer composition 1-2 contained glycolide remained in the polymerization composition preparation.

Then, a composition was obtained by the same procedure as in Example 1-1 except for blending no glycolide as the plasticizer. Furthermore, a molded body was obtained by the same procedure as in Example 1-1.

[Example 1-3]

A composition was obtained by the same procedure as in Example 1-1 except for blending a polyglycolic acid polymer masterbatch containing 48 parts by mass of glycolide in place of the glycolide as the plasticizer in the polymer composition 1-1. Furthermore, a molded body was obtained by the same procedure as in Example 1-1.

[Comparative Example 1-1]

A composition and a molded body were obtained by the same procedure as in Example 1-1 except for blending no plasticizer in the polymer composition 1-1.

[Comparative Examples 1-2 to 1-4]

Compositions and molded bodies were each obtained by the same procedure as in Comparative Example 1-1 except for changing the amount of the degradation accelerator. The content of the degradation accelerator in each of Comparative Examples 1-2 to 1-4 is listed in Table 2.

[Comparative Example 1-5]

A composition and a molded body were obtained by the same procedure as in Example 1-1 except for blending polyethylene glycol (PEG, Mw 20000) in place of the glycolide as the plasticizer in the polymer composition 1-1.

[Comparative Example 1-6]

A composition was obtained by the same procedure as in Example 1-3 except for increasing the compounded amount of the polyglycolic acid polymer masterbatch containing 48 parts by mass of glycolide. The content of the glycolide as the plasticizer in this composition corresponded to 60 mass%. Extrusion molding was not possible for this composition, and no pellets were obtained.

The evaluation results for Examples 1-1 to 1-3 and Comparative Examples 1-1 to 1-6 are indicated in Table 2. The glycolic acid polymer in the composition of each of Examples 1-1 to 1-3 and Comparative Examples 1-1 to 1-6 was a homopolymer of glycolic acid.

[Table 2]

| | Polymer SP value $[(J/cm^3)^{1/2}]$ | Plasticizer SP value $[(J/cm^3)^{1/2}]$ | Plasticizer addition timing | Molded body | | | | |
| --- | --- | --- | --- | --- | --- | --- | --- | --- |
| | | | | Additive content | | Tg [°C] | Mw [g/mol] | Rate of decrease in thickness [mm/h] |
| | | | | Plasticizer % | Degradation accelerator % | | | |
| Example 1-1 | PGA (26.8) | Glycolide (268) | In preparation of composition | 12 | 7 | 39 | 200000 | 0.13 |
| Example 1-2 | PGA (26.8) | Glycolide (268) | In preparation of polymer | 18 | 7 | 30 | 244000 | 0.17 |
| Example 1-3 | PGA (26.8) | Glycolide (268) | In preparation of composition (Masterbatch addition) | 32 | 7 | 23 | 153000 | 0.32 |
| Comparative Example 1-1 | PGA (26.8) | - | - | 0 | 7 | 45 | 220000 | 0.04 |
| Comparative Example 1-2 | PGA (26.8) | - | - | 0 | 3 | 45 | 220000 | 0.04 |
| Comparative Example 1-3 | PGA (26.8) | - | - | 0 | 12 | 45 | 220000 | 0.05 |
| Comparative Example 1-4 | PGA (26.8) | - | - | 0 | 20 | 45 | 220000 | 0.05 |
| Comparative Example 1-5 | PGA (26.8) | PEG (19.2) | In preparation of composition | 12 | 7 | 43 | 220000 | 0.03 |
| Comparative Example 1-6 | PGA (26.8) | Glycolide (268) | In preparation of composition (Masterbatch addition) | 60 | 7 | - | - | - |

In the table, "In preparation of composition" of "Plasticizer addition timing" indicates that the plasticizer was added during the preparation of the composition after the polymer composition adjustment. "In preparation of polymer" indicates the glycolide remained after the polymer composition (polymer) preparation was used as the plasticizer.

It was found that all of the molded bodies of Examples 1-1 to 1-3 each had a high rate of decrease in thickness, and the degradation rate improved. Furthermore, from the results of Examples 1-1 and 1-2, it was found that even when the plasticizer was added in the preparation of the polymer composition or in the preparation of the composition, a high rate of decrease in thickness was achieved. On the other hand, the molded bodies of Comparative Examples 1-1 to 1-4, in which no plasticizer was added, each had a slow rate of decrease in thickness. Furthermore, the molded body of Comparative Example 1-5, in which the absolute value of the difference between the SP value of the polymer and the SP value of the plasticizer was 7.6, also had a slow rate of decrease in thickness.

[Example 2-1]

In a polymerization vessel, with respect to 100 parts by mass of glycolide, 0.03 parts by mass of tin dichloride as a catalyst, 1 part by mass of pentaerythritol tetrakis[3-(3,5-di-tert-butyl-4-hydroxyphenyl)propionate] as a thermal stabilizer, 2 parts by mass of polyethylene glycol (PEG, Mw 7500) as a polymerization initiator were charged. The charged contents were retained under a heated condition at 140°C for 6 hours, and thus a polymer composition 2-1 was obtained. The polymer composition 2-1 contained glycolide remained in the polymerization composition preparation.

Furthermore, a composition and a molded body were obtained by the same procedure as in Example 1-1.

[Example 2-2]

A polymer composition 2-2 was obtained by the same procedure as in Example 2-1 except that the charged contents were retained under a heated condition at 140°C for 3.5 hours. The polymer composition 2-2 contained glycolide remained in the polymerization composition preparation. Then, a composition was obtained by the same procedure as in Example 2-1 except for blending no plasticizer. Furthermore, a molded body was obtained by the same procedure as in Example 2-1.

[Example 2-3]

A polymer composition 2-3 was obtained by the same procedure as in Example 2-1 except for changing the amount of the tin dichloride to 0.01 parts by mass and except that the charged contents were retained under a heated condition at 140°C for 3 hours. The polymer composition 2-3 contained glycolide remained in the polymerization composition preparation. Then, a composition was obtained by the same procedure as in Example 2-1 except for blending no plasticizer. Furthermore, a molded body was obtained by the same procedure as in Example 2-1.

[Example 2-4]

A polymer composition 2-4 was obtained by the same procedure as in Example 2-1 except for charging polycaprolactone (PCL, Mw 4000) in place of the PEG as the polymerization initiator and except that the charged contents were retained under a heated condition at 140°C for 3 hours. The polymer composition 2-4 contained glycolide remained in the polymerization composition preparation. Furthermore, a composition and a molded body were obtained by the same procedure as in Example 2-1.

[Example 2-5]

A polymer composition 2-5 was obtained by the same procedure as in Example 2-1 except for charging polycaprolactone (PCL, Mw 4000) in place of the PEG as the polymerization initiator and except that the charged contents were retained under a heated condition at 140°C for 1.5 hours. The polymer composition 2-5 contained glycolide remained in the polymerization composition preparation. Then, a composition and a molded body were obtained by the same procedure as in Example 2-2 except for blending no plasticizer.

[Example 2-6]

A polymer composition 2-6 was obtained by the same procedure as in Example 2-1 except for charging polytetraethylene ether glycol (PTMG, Mw 3000) in place of the PEG as the polymerization initiator and except that the charged contents were retained under a heated condition at 140°C for 3 hours. The polymer composition 2-6 contained glycolide remained in the polymerization composition preparation. Furthermore, a composition and a molded body were obtained by the same procedure as in Example 2-1.

[Example 2-7]

A polymer composition 2-7 was obtained by the same procedure as in Example 2-1 except for charging polytetraethylene ether glycol (PTMG, Mw 3000) in place of the PEG as the polymerization initiator and except that the charged contents were retained under a heated condition at 140°C for 1.5 hours. The polymer composition 2-6 contained glycolide remained in the polymerization composition preparation. Then, a composition and a molded body were obtained by the same procedure as in Example 2-2 except for blending no plasticizer.

[Comparative Example 2-1]

A composition and a molded body were obtained by the same procedure as in Example 2-2 except for blending no degradation accelerator in the polymer composition 2-2.

[Comparative Example 2-2]

A composition and a molded body were obtained by the same procedure as in Example 2-1 except for blending no plasticizer in the polymer composition 2-1.

[Comparative Example 2-3]

A composition and a molded body were obtained by the same procedure as in Example 2-4 except for blending no plasticizer in the polymer composition 2-4.

[Comparative Example 2-4]

A composition and a molded body were obtained by the same procedure as in Example 2-6 except for blending no plasticizer in the polymer composition 2-6.

The evaluation results for each of Examples 2-1 to 2-7 and Comparative Examples 2-1 to 2-4 are indicated in Table 3. The glycolic acid polymer in each of the compositions of Examples 2-1 to 2-7 and Comparative Examples 2-1 to 2-4 is a block copolymer including a glycolic acid polymer chain (macromolecular chain A) and a polyethylene glycol or the like (macromolecular chain B).

[Table 3]

| | Polymer SP value [(J/cm³)^{1/2}] | Plasticizer SP value [(J/cm³)^{1/2}] | Plasticizer addition timing | Additive content | | Molded body | | |
|---|---|---|---|---|---|---|---|---|
| | | | | Plasticizer % | Degradation accelerator % | Tg [°C] | Mw [g/mol] | Rate of decrease in thickness [mm/h] |
| Example 2-1 | PGA-PEG (26.6) | Glycolide (26.8) | In preparation of composition | 23 | 7 | 20 | 283000 | 0.37 |
| Example 2-2 | PGA-PEG (26.6) | Glycolide (26.8) | In preparation of polymer | 15 | 7 | 30 | 301000 | 0.18 |
| Example 2-3 | PGA-PEG (26.6) | Glycolide (26.8) | In preparation of polymer | 33 | 7 | 15 | 216000 | 0.70 |
| Example 2-4 | PGA-PCL (26.1) | Glycolide (26.8) | In preparation of composition | 13 | 7 | 31 | 240000 | 0.18 |
| Example 2-5 | PGA-PCL (26.1) | Glycolide (26.8) | In preparation of polymer | 30 | 7 | 24 | 250000 | 0.31 |
| Example 2-6 | PGA-PTMG (26.5) | Glycolide (26.8) | In preparation of composition | 13 | 7 | 32 | 210000 | 0.17 |
| Example 2-7 | PGA-PTMG (26.5) | Glycolide (26.8) | In preparation of polymer | 27 | 7 | 26 | 210000 | 0.29 |
| Comparative Example 2-1 | PGA-PEG (26.6) | Glycolide (26.8) | In preparation of polymer | 15 | 0 | 30 | 240000 | 008 |
| Comparative Example 2-2 | PGA-PEG (26.6) | Glycolide (26.8) | - | 3 | 7 | 38 | 215000 | 008 |
| Comparative Example 2-3 | PGA-PCL (26.1) | Glycolide (26.8) | - | 2 | 7 | 38 | 270000 | 0.08 |
| Comparative Example 2-4 | PGA-PTMG (26.5) | Glycolide (26.8) | - | 2 | 7 | 38 | 210000 | 0.11 |

It was found that the molded bodies of Examples 2-1 to 2-7 each had a high rate of decrease in thickness, and the degradation rate improved. Furthermore, from the results of Examples 2-1 to 2-3, Examples 2-4 and 2-5, and Examples 2-6 and 2-7, it was found that even when the plasticizer was added in the preparation of the polymer composition or in the preparation of the composition, a high rate of decrease in thickness was achieved.

On the other hand, the molded body of Comparative Example 2-1, in which no degradation accelerator was added, had a slow rate of decrease in thickness. Furthermore, the molded bodies of Comparative Examples 2-2 to 2-4, in which the content of the plasticizer (glycolide remained in the polymer composition preparation) was 2 or 3 mass%, also each had a slow rate of decrease in thickness.

Furthermore, from the evaluation results of molded bodies of Example 2-2, Comparative Example 2-1, and Comparative Example 2-2, it was found that the synergistic effect by addition of both the degradation accelerator and the plasticizer was achieved.

[Example 3-1]

A composition and a molded body were obtained by the same procedure as in Example 2-2 except for blending triacetin (TrA) as a plasticizer in the polymer composition 2-2.

[Example 3-2]

A composition and a molded body were obtained by the same procedure as in Example 3-1 except for blending DAIFATTY (trade name)-101 (available from Daihachi Kogyo Co., Ltd.), which was an adipic acid ester, in place of the TrA as the plasticizer.

[Example 3-3]

A composition and a molded body were obtained by the same procedure as in Example 3-1 except for blending ethylene carbonate (EC) in place of the TrA as the plasticizer.

[Example 3-4]

A composition and a molded body were obtained by the same procedure as in Example 3-1 except for blending dimethyl phthalate (DMP) in place of the TrA as the plasticizer.

[Example 3-5]

A composition and a molded body were obtained by the same procedure as in Example 3-1 except for blending polyethylene glycol (PEG, Mw 20000) in place of the TrA as the plasticizer.

The evaluation results of Examples 3-1 to 3-5 are indicated in Table 4. The glycolic acid polymer in each of the compositions of Examples 3-1 to 3-5 is a block copolymer including a glycolic acid polymer chain (macromolecular chain A) and a polyethylene glycol or the like (macromolecular chain B). The polymer compositions of Examples 3-1 to 3-5 contained glycolide remained in the polymerization composition preparation.

[Table 4]

| | Polymer SP value [(J/cm³)^{1/2}] | Plasticizer SP value [(J/cm³)^{1/2}] | Plasticizer addition timing | Molded body | | | | |
|---|---|---|---|---|---|---|---|---|
| | | | | Additive content | | Tg [°C] | Mw [g/mol] | Rate of decrease in thickness [mm/h] |
| | | | | Plasticizer % | Degradation accelerator % | | | |
| Example 3-1 | PGA-PEG (26.6) | Glycolide (26.8) | In preparation of polymer | 16 | 7 | 6 | 224000 | 0.24 |
| | | TrA (21.2) | In preparation of composition | 10 | | | | |
| Example 3-2 | PGA-PEG (26.6) | Glycolide (26.8) | In preparation of polymer | 15 | 7 | 5 | 280000 | 0.29 |
| | | DAIFATTY-101 (21.9) | In preparation of composition | 10 | | | | |
| Example 3-3 | PGA-PEG (26.6) | Glycolide (26.8) | In preparation of polymer | 17 | 7 | 5 | 257000 | 0.24 |
| | | EC (225) | In preparation of composition | 10 | | | | |
| Example 3-4 | PGA-PEG (26.6) | Glycolide (26.8) | In preparation of polymer | 16 | 7 | 9 | 261000 | 0.30 |
| | | DMP (225) | In preparation of composition | 10 | | | | |
| Example 3-5 | PGA-PEG (26.6) | Glycolide (26.8) | In preparation of polymer | 15 | 7 | 21 | 230000 | 0.18 |
| | | PEG (192) | In preparation of composition | 10 | | | | |

It was found that all of the molded bodies of Examples 3-1 to 3-5 each had a high rate of decrease in thickness, and the degradation rate improved.

**INDUSTRIAL APPLICABILITY**

The molded body according to an embodiment of the present invention has a high degradation rate and can be used for, for example, a downhole tool for well drilling.

**Claims**

1. A molded body comprising a composition comprising a glycolic acid polymer, a plasticizer, and a degradation accelerator,

   wherein an absolute value of a difference between a Fedors solubility parameter of the plasticizer and a Fedors solubility parameter of the glycolic acid polymer is 6 $(J/cm^3)^{1/2}$ or less, and
   a content of the plasticizer in the composition is 10 mass% or greater and 50 mass% or less.

2. The molded body according to claim 1, wherein

   the glycolic acid polymer is a copolymer comprising a straight macromolecular chain A being chemically bonded to a macromolecular chain B, the macromolecular chain A comprising a repeating unit derived from glycolic acid, and the macromolecular chain B being different from the macromolecular chain A, and
   the macromolecular chain B is derived from a macromolecular compound having a glass transition temperature of lower than 45°C.

3. The molded body according to claim 2, wherein the glycolic acid polymer is a block copolymer comprising the macromolecular chain A and the macromolecular chain B.

4. The molded body according to claim 1, wherein the glycolic acid polymer is a homopolymer of glycolic acid.

5. The molded body according to any one of claims 1 to 4, wherein a weight average molecular weight of the composition is 150000 or greater and 500000 or less.

6. The molded body according to any one of claims 1 to 5, wherein the degradation accelerator is carboxylic acid anhydride.

7. The molded body according to any one of claims 1 to 6, having a thickness or a diameter of 1 mm or greater.

8. A downhole tool member comprising the molded body according to any one of claims 1 to 7.

9. A downhole tool comprising the downhole tool member according to claim 8.

## INTERNATIONAL SEARCH REPORT

International application No.

**PCT/JP2022/011783**

### A. CLASSIFICATION OF SUBJECT MATTER

*C08K 5/1539*(2006.01)i; *C08K 5/1575*(2006.01)i; *C08L 67/04*(2006.01)i; *C08L 101/16*(2006.01)i
FI: C08L67/04; C08K5/1575; C08K5/1539; C08L101/16

According to International Patent Classification (IPC) or to both national classification and IPC

### B. FIELDS SEARCHED

Minimum documentation searched (classification system followed by classification symbols)

C08K5/1539; C08K5/1575; C08L67/04; C08L101/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-217602 A (KUREHA CORP.) 30 August 2007 (2007-08-30) claim 1, 7-8, paragraphs [0007], [0025]-[0027], [0040]-[0064], examples 3-7, comparative example 4 | 1-5, 7 |
| A | | 6, 8-9 |
| X | JP 2002-371173 A (MITSUI CHEMICALS, INC.) 26 December 2002 (2002-12-26) claims 1-3, 6-8, paragraphs [0009], [0015], [0016], [0019], [0027]-[0043], preparation no. 22, 23 | 1-5, 7 |
| Y | | 6-7 |
| A | | 8-9 |
| Y | JP 2020-002189 A (KUREHA CORP.) 09 January 2020 (2020-01-09) claims 1, 3, paragraphs [0033]-[0035] | 6-7 |
| A | JP 06-500819 A (E.I. DU PONT DE NEMOURS AND CO.) 27 January 1994 (1994-01-27) claims 1-6 | 1-9 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/011783**

| Patent document cited in search report | | | Publication date (day/month/year) | Patent family member(s) | Publication date (day/month/year) |
|---|---|---|---|---|---|
| JP | 2007-217602 | A | 30 August 2007 | (Family: none) | |
| JP | 2002-371173 | A | 26 December 2002 | (Family: none) | |
| JP | 2020-002189 | A | 09 January 2020 | (Family: none) | |
| JP | 06-500819 | A | 27 January 1994 | WO 1992/004410 A1 claims 1-6 CN 1059919 A | |

Form PCT/ISA/210 (patent family annex) (January 2015)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019060219 A
- US 20050205266 A